# EUROPÄISCHE PATENTSCHRIFT

(11) **EP 3 364 090 B1**
(45) Veröffentlichungstag und Bekanntmachung des Hinweises auf die Patenterteilung: **19.02.2020**
(21) Anmeldenummer: 17206495.8
(22) Anmeldetag: 11.12.2017
(51) Int. Cl.: F16L 37/088

(54) **VERBINDER ZUM VERBINDEN ZWEIER FLUIDFÜHRENDER ELEMENTE**
CONNECTOR FOR CONNECTION BETWEEN TWO FLUID-CONVEYING ELEMENTS
DISPOSITIF DE RACCORDEMENT PERMETTANT DE RACCORDER DEUX ÉLÉMENTS DE TRANSPORT DE FLUIDE

(43) Veröffentlichungstag der Anmeldung: 22.08.2018
(73) Patentinhaber: TI Automotive (Fuldabrück) GmbH, 34277 Fuldabrück (DE)
(72) Erfinder: Rohde, Reiner, 34323 Malsfeld (DE); Barthel, Iris, 34270 Schauenburg (DE); Bube, Kay, 36277 Schanklengsfeld (DE); Häckel, Andre, 34513 Waldeck (DE); Bol, Alexander, 34225 Baunatal (DE); Fischbach, Gerd, 34582 Borken (DE); Knobloch, Harald, 69121 Heidelberg (DE)
(74) Vertreter: Andrejewski - Honke Patent- und Rechtsanwälte Partnerschaft mbB

(56) Entgegenhaltungen:
- EP-A1- 0 750 152
- WO-A1-2013/166536
- DE-A1-102014 113 123
- US-A- 2 805 089
- US-A- 3 151 891
- US-A1- 2004 183 301

## Beschreibung

Die Erfindung betrifft einen Verbinder zum Verbinden zweier fluidführender Elemente - insbesondere zum Verbinden von zwei Kraftfahrzeugrohrleitungen - mit einem weiblichen Steckteil und einem in das weibliche Steckteil einsteckbaren männlichen Steckteil, wobei an dem weiblichen Steckteil ein Rückhalter angeschlossen ist, mit dem das männliche Steckteil im eingesteckten Zustand an dem weiblichen Steckteil fixierbar ist, wobei der Rückhalter aus einer Offenstellung in eine Fixierstellung - und umgekehrt - um eine im Bereich der Außenoberfläche des weiblichen Steckteils angeordnete Schwenkachse schwenkbar ist, wobei der Rückhalter U-förmig mit einem U-Bügel und zwei an dem U-Bügel angeschlossenen U-Schenkeln ausgebildet ist und wobei der Rückhalter mit einem Ende eines ersten U-Schenkels in eine Schwenkausnehmung des weiblichen Steckteils eingreift. - Bei dem Verbinder handelt es sich nach bevorzugter Ausführungsform um einen Schnellverbinder (Quick Connector). Gemäß einer Ausführungsform wird der Verbinder zum Verbinden zweier Rohrleitungen, insbesondere von zwei Kraftfahrzeugrohrleitungen eingesetzt. Es liegt auch im Rahmen der Erfindung, dass der Verbinder ein fluidführendes Aggregat - beispielsweise einen Tank, eine Pumpe, einen Wärmetauscher, ein Thermostat, ein Ventil oder dergleichen - mit einer Rohrleitung, insbesondere einer Kraftfahrzeugrohrleitung verbindet. Grundsätzlich kann der Verbinder auch zum Verbinden zweier fluidführender Aggregate eingesetzt werden.

Verbinder bzw. Schnellverbinder der vorstehend beschriebenen Art sind aus der Praxis in unterschiedlichen Ausführungsformen bekannt. Die bekannten Verbinder haben häufig den Nachteil, dass der das männliche Steckteil an dem weiblichen Steckteil fixierende Rückhalter nur verhältnismäßig und unter Zwängen schwierig in seine Fixierstellung überführbar ist und oftmals nur schwierig und mit relativ hohem Kraftaufwand wieder in seine Offenstellung bringbar ist. Die verhältnismäßig komplizierte Montage bzw. Demontage der Rückhalter an den bekannten Verbindern zieht nicht selten Verbindungsfehler bzw. störanfällige Verbindungen nach sich. Ein weiterer Nachteil der bekannten Verbinder besteht darin, dass der Rückhalter insbesondere bei seiner Überführung in die Offenstellung vollständig vom Verbinder getrennt wird und somit ein verlierbares Bauteil darstellt. Außerdem kann zumindest bei einigen bekannten Verbindern nicht immer eine funktionssichere und dichte Verbindung zwischen männlichem Steckteil und weiblichem Steckteil realisiert werden. Insoweit sind die bekannten Verbinder bzw. Schnellverbinder verbesserungsbedürftig.

In WO 2013/166536 A1 ist eine Steckverbindung zum Verbinden von Leitungen beschrieben. Diese Steckverbindung umfasst ein weibliches Steckteil und ein männliches Steckteil. Das weibliche Steckteil ist mit einer Rastfeder versehen, die in ihrer geschlossenen Position in eine umlaufende Nut des männlichen Steckteils eingreift, um das männliche Steckteil in dem weiblichen Steckteil zu sichern. Zur Freigabe des männlichen Steckteils kann die Rastfeder in eine offene Position überführt werden, in der die Rastfeder nicht mehr in die das männliche Steckteil umlaufende Nut eingreift.

In EP 0 750 152 A1 wird eine Steckverbindung für den Anschluss von Rohr-und Schlauchleitungen beschrieben. Die Steckverbindung weist eine Innenhülse und eine Außenhülse auf. Ein Rohrstützen kann über die Außenhülse geschoben werden, der mit Hilfe eines Sicherungsmittels mit der Außenhülse verrastbar ist.

Aus US 3 151 891 A und US 2 805 089 A sind Verbinder bekannt, bei denen ein Omega-förmiger Ring innerhalb des Verbinders zwischen dem weiblichen Steckteil und dem männlichen Steckteil angeordnet ist. Zur Überführung von einer geschlossenen Position eines solchen Ringes in die offene Position ist ein Auseinanderspreizen der Ringenden vorgesehen.

Der Erfindung liegt das technische Problem zugrunde, einen Verbinder der eingangs genannten Art anzugeben, bei dem die eingangs aufgeführten Nachteile vermieden werden können und bei dem vor allem der Rückhalter auf sehr einfache und funktionssichere Weise sowohl in die Fixierstellung als auch in die Offenstellung überführbar ist. Weiterhin soll das Problem der Verlierbarkeit des Rückhalters gelöst werden.

Zur Lösung dieses technischen Problems lehrt die Erfindung einen Verbinder der eingangs genannten Art, welcher dadurch gekennzeichnet ist, dass
die Schwenkausnehmung als Schwenkbohrung des weiblichen Steckteils ausgebildet ist, wobei das Ende des ersten U-Schenkels bzw. ein an dem ersten U-Schenkel angeschlossener Schwenkfortsatz formschlüssig in diese als Schwenkbohrung ausgebildete Schwenkausnehmung eingreift und wobei die Schwenkachse in der Schwenkbohrung angeordnet ist.
   oder
dass die Schwenkausnehmung als Langloch ausgebildet ist, wobei das Ende des ersten U-Schenkels bzw. ein an dem ersten U-Schenkel angeschlossener Schwenkfortsatz mit Spiel in das Langloch eingreift und wobei die Schwenkachse des Rückhalters in dem Langloch angeordnet ist.

Nach besonders bevorzugter Ausführungsform der Erfindung ist der Verbinder als Schnellverbinder (Quick Connector) ausgebildet. Das weibliche Steckteil und das männliche Steckteil bestehen zweckmäßigerweise aus zumindest einem Kunststoff bzw. im Wesentlichen aus zumindest einem Kunststoff. Es empfiehlt sich, dass das weibliche Steckteil und/oder das männliche Steckteil aus zumindest einem Kunststoff bzw. im Wesentlich aus zumindest einem Kunststoff aus der Gruppe "aliphatisches Polyamid, aromatisches Polyamid, Polyphenylensulfid" (PPS) bestehen. Grundsätzlich können die beiden Steckteile aber auch aus anderen Kunststoffen bestehen bzw. im Wesentlichen bestehen. - Zweckmäßigerweise besteht der Rückhalter aus einem Metall bzw. im Wesentlichen aus einem Metall. Es hat sich bewährt, dass der Rückhalter aus Stahl bzw. im Wesentlichen aus Stahl besteht.

Erfindungsgemäß ist der Rückhalter U-förmig mit einem U-Bügel und zwei an dem Ü-Bügel angeschlossenen U-Schenkeln ausgebildet ist. Zweckmäßigerweise sind die beiden U-Schenkel federelastisch an dem U-Bügel angeschlossen. Empfohlenermaßen bilden die beiden U-Schenkel jeweils eine zur U-Außenseite gerichtete bogenförmige Krümmung aus. Es empfiehlt sich dabei, dass die bogenförmige Krümmung jeweils in Bezug auf die Länge des jeweiligen U-Schenkels im mittleren Drittel des U-Schenkels angeordnet ist. Die bogenförmige Krümmung eines U-Schenkels erstreckt sich zweckmäßigerweise über zumindest ein Fünftel und maximal über die Hälfte der Länge des jeweiligen U-Schenkels.

Erfindungsgemäß ist der Rückhalter aus einer Offenstellung in eine Fixierstellung bzw. aus der Fixierstellung in die Offenstellung um eine im Bereich der Außenoberfläche des weiblichen Steckteils angeordnete Schwenkachse bzw. Rotationsachse schwenkbar bzw. rotierbar. Es liegt im Rahmen der Erfindung, dass der Rückhalter dabei in Richtung quer zur Längsachse L des weiblichen Steckteils bzw. zur Längsachse L des männlichen Steckteils schwenkbar bzw. rotierbar ist. Vorzugsweise ist die Schwenkachse bzw. Rotationsachse an einem Ende eines ersten U-Schenkels des Rückhalters angeordnet bzw. wird die Schwenkachse bzw. Rotationsachse von diesem Ende des U-Schenkels gebildet. Erfindungsgemäß greift der Rückhalter mit dem Ende des ersten U-Schenkels in eine Schwenkausnehmung des weiblichen Steckteils ein und die Schwenkachse bzw. Rotationsachse ist in dieser Schwenkausnehmung angeordnet. Es liegt im Rahmen der Erfindung, dass der Rückhalter bzw. der erste U-Schenkel bzw. das Ende des ersten U-Schenkels in der Schwenkausnehmung des weiblichen Steckteils fixiert ist, so dass der Rückhalter vorzugsweise unverlierbar an dem weiblichen Steckteil gehalten ist. Die Unverlierbarkeit des Rückhalters ist ein besonders vorteilhaftes Merkmal der Erfindung.

Eine besonders bevorzugte Ausführungsform der Erfindung ist dadurch gekennzeichnet, dass an dem die Schwenkachse bildenden Ende des ersten U-Schenkels zumindest ein - vorzugsweise ein - sich quer zur Längsrichtung des ersten U-Schenkels erstreckender Schwenkfortsatz angeschlossen ist. Vorzugsweise bildet dieser Schwenkfortsatz die Schwenkachse des Rückhalters. Zweckmäßigerweise ist der Schwenkfortsatz senkrecht bzw. im Wesentlichen senkrecht zur Längsrichtung des ersten U-Schenkels orientiert. Die Länge des Schwenkfortsatzes beträgt empfohlenermaßen maximal 50 %, vorzugsweise maximal 40 %, bevorzugt maximal 30 % und sehr bevorzugt maximal 25 % der Länge des zugeordneten ersten U-Schenkels.

Gemäß empfohlener Ausführungsform der Erfindung greift das die Schwenkachse bildende Ende des ersten U-Schenkels oder der an das Ende des ersten U-Schenkels angeordnete Schwenkfortsatz in eine über ihren Umfang geschlossene Schwenkausnehmung des weiblichen Steckteils ein. Zweckmäßigerweise ist in diesem Eingriffszustand der Schwenkfortsatz bzw. die Längserstreckung des Schwenkfortsatzes des ersten U-Schenkels parallel bzw. im Wesentlichen parallel zur Längsachse L des weiblichen Steckteils orientiert. Es liegt weiterhin im Rahmen der Erfindung, dass die Eingriffsrichtung des Schwenkfortsatzes in die Schwenkausnehmung parallel bzw. im Wesentlichen parallel zur Längsachse L des weiblichen Steckteils angeordnet ist. Fernerhin liegt es im Rahmen der Erfindung, dass die Schwenkachse bzw. Rotationsachse des Rückhalters parallel bzw. im Wesentlichen parallel zur Längsachse L des weiblichen Steckteils orientiert ist.

Gemäß der ersten erfindungsgemäßen Ausführungsform ist die Schwenkausnehmung des weiblichen Steckteils als Schwenkbohrung des weiblichen Steckteils ausgebildet und das Ende des ersten U-Schenkels bzw. ein an dem ersten U-Schenkel angeschlossener Schwenkfortsatz greift formschlüssig in diese als Schwenkbohrung ausgebildete Schwenkausnehmung ein. Zweckmäßigerweise ist dieser Eingriff des Endes des ersten U-Schenkels bzw. des Schwenkfortsatzes in die Schwenkausnehmung/Schwenkbohrung spielfrei bzw. im Wesentlichen spielfrei ausgebildet. Erfindungsgemäß ist die Schwenkachse des Rückhalters in der Schwenkbohrung angeordnet. Es liegt fernerhin im Rahmen der Erfindung, dass die Schwenkausnehmung dieser Ausführungsform bzw. die Schwenkbohrung parallel bzw.im Wesentlichen parallel zur Längsachse L des weiblichen Steckteils orientiert ist.

Nach der zweiten erfindungsgemäßen Ausführungsform ist die Schwenkausnehmung des weiblichen Steckteils als Langloch ausgebildet und das Ende des ersten U-Schenkels bzw. ein an dem ersten U-Schenkel angeschlossener Schwenkfortsatz greift mit Spiel in dieses Langloch ein. Erfindungsgemäß ist dabei die Schwenkachse des Rückhalters in dem Langloch angeordnet ist. Zweckmäßigerweise ist die Längserstreckung I des Langloches quer zur Längsachse L des weiblichen Steckteils orientiert. - Gemäß einer besonders bevorzugten Ausgestaltung der Erfindung weist das Langloch eine quer zur Längserstreckung des Langloches angeordnete Langlochnut auf, wobei das Ende des ersten U-Schenkels bzw. der an dem ersten U-Schenkel angeschlossene Schwenkfortsatz zumindest beim Verschwenken des Rückhalters in die Offenstellung oder in die Fixierstellung in der Langlochnut des Langloches angeordnet ist. Es empfiehlt sich, dass dabei das Ende des ersten U-Schenkels bzw. der an dem Ende des ersten U-Schenkels angeschlossene Schwenkfortsatz formschlüssig in die Langlochnut des Langloches eingreift.

Es liegt im Rahmen der Erfindung, dass der zweite U-Schenkel - insbesondere der der Schwenkachse gegenüberliegende zweite U-Schenkel - mit seinem Ende in der Fixierstellung des Rückhalters an dem weiblichen Steckteil fixierbar bzw. verrastbar ist. Bevorzugt ist das Ende des zweiten U-Schenkels in einer an der Außenoberfläche des weiblichen Steckteils angeordneten Fixierausnehmung fixierbar bzw. verrastbar. Empfohlenermaßen wird die Fixierausnehmung bzw. das in der Fixierausnehmung fixierte bzw. verrastete Ende des zweiten U-Schenkels zumindest bereichsweise zur Außenseite des Verbinders bzw. des weiblichen Steckteils hin von zumindest einen bzw. einem Abdeckelement abgedeckt und geschützt. - Es empfiehlt sich, dass der zweite U-Schenkel mit seinem Ende in der Offenstellung des Rückhalters an dem weiblichen Steckteil fixierbar bzw. verrastbar ist. Vorzugsweise ist das Ende des zweiten U-Schenkels dabei in einer an der Außenoberfläche des weiblichen Steckteils angeordneten Offenstellungsausnehmung fixierbar bzw. verrastbar. Empfohlenermaßen weist die Offenstellungsausnehmung einen in Schwenkrichtung des Rückhalters angeordneten Anschlag für das Ende des zweiten U-Schenkels auf. Schwenkrichtung des Rückhalters meint hier die Schwenkrichtung aus der Fixierstellung in die Offenstellung. Es empfiehlt sich, dass die Offenstellungsausnehmung bzw. das in der Offenstellungausnehmung fixierte bzw. verrastete Ende des zweiten U-Schenkels zur Außenseite des Verbinders hin von einem zweiten Abdeckelement zumindest bereichsweise abgedeckt wird.

Nach einer besonderen Ausgestaltung der Erfindung ist der zweite U-Schenkel mit seinem Ende in einer Zwischenstellung des Rückhalters an dem weiblichen Steckteil fixierbar bzw. verrastbar. Dabei ist der zweite U-Schenkel bzw. das Ende des zweiten U-Schenkels zweckmäßigerweise in einer an der Außenoberfläche des weiblichen Steckteils angeordneten Zwischenstellungsausnehmung fixierbar bzw. verrastbar. Die Zwischenstellungsausnehmung befindet sich vorzugsweise zwischen der Fixierausnehmung und der Offenstellungsausnehmung an der Außenoberfläche des weiblichen Steckteils.

Eine besonders empfohlene Ausführungsform der Erfindung ist dadurch gekennzeichnet, dass an dem Ende des zweiten U-Schenkels ein sich quer zur Längsrichtung des zweiten U-Schenkels erstreckender U-Fortsatz vorgesehen ist. Zweckmäßigerweise erstreckt sich der U-Fortsatz senkrecht bzw. im Wesentlichen senkrecht zur Längsrichtung des zweiten U-Schenkels. Es liegt im Rahmen der Erfindung, dass der U-Fortsatz des zweiten U-Schenkels in der Fixierstellung in der Fixierausnehmung und/oder in der Zwischenstellung in der Zwischenstellungsausnehmung und/oder in der Offenstellung in der Offenstellungsausnehmung fixierbar bzw. verrastbar ist. - Es liegt weiterhin im Rahmen der Erfindung, dass der Rückhalter an den Enden seiner U-Schenkel jeweils einen Fortsatz - insbesondere den Schwenkfortsatz einerseits und den U-Fortsatz andererseits - aufweist. Nach besonders bewährter Ausführungsform der Erfindung stehen die beiden Fortsätze in entgegengesetzte Richtungen von dem Rückhalter ab. Vorzugsweise sind beide Fortsätze senkrecht bzw. im Wesentlichen senkrecht zu dem jeweils zugeordneten U-Schenkel angeordnet. Zweckmäßigerweise sind beide Fortsätze in der montierten Funktionsstellung des Rückhalters parallel bzw. im Wesentlichen parallel zur Längsachse L des weiblichen Steckteils orientiert. Es empfiehlt sich, das die Länge beider Fortsätze maximal 50 %, vorzugsweise maximal 40 %, bevorzugt maximal 30 % und besonders bevorzugt maximal 25 % der Länge des jeweils zugeordneten U-Schenkels beträgt. Es liegt im Rahmen der Erfindung, dass die Länge beider Fortsätze gleich bzw. im Wesentlichen gleich ist. Weiterhin liegt es im Rahmen der Erfindung, dass die Länge der beiden U-Schenkel gleich bzw. im Wesentlichen gleich ist.

Vorzugsweise wird das Ende des zweiten U-Schenkels bzw. der U-Fortsatz an dem zweiten U-Schenkel von der Fixierstellung in die Offenstellung über einen Schwenkwinkel α von 20° bis 100°, vorzugsweise von 20° bis 90°, bevorzugt von 25° bis 80° und sehr bevorzugt von 25° bis 70° sowie besonders bevorzugt von 25° bis 60° um die Schwenkachse verschwenkt. Dabei wird der Rückhalter zweckmäßigerweise in der Schwenkausnehmung unverlierbar gehalten. Es liegt im Rahmen der Erfindung, dass sich der Abstand des U-Bügels zu dem weiblichen Steckteil bei der Verschwenkung von der Fixierstellung in die Offenstellung vergrößert.

Es liegt fernerhin im Rahmen der Erfindung, dass das männliche Steckteil in eine Steckausnehmung des weiblichen Steckteils eingesteckt wird. Vorzugsweise ist im montierten bzw. eingesteckten Zustand des männlichen Steckteils zumindest ein Dichtungselement zwischen dem weiblichen Steckteil und dem männlichen Steckteil vorgesehen. Bei dem Dichtungselement handelt es sich empfohlenermaßen um einen über den Umfang des männlichen Steckteils umlaufenden Dichtungsring bzw. O-Dichtungsring. Gemäß einer bevorzugten Ausgestaltung der Erfindung ist im montierten bzw. eingesteckten Zustand des männlichen Steckteils ein Distanzring zwischen dem männlichen Steckteil und dem weiblichen Steckteil angeordnet. Dabei liegt es im Rahmen der Erfindung, dass der Distanzring in Einsteckrichtung vor dem zumindest einen Dichtungselement, bevorzugt vor dem zumindest einen Dichtungsring bzw. O-Dichtungsring angeordnet ist. Eine Ausführungsform der Erfindung ist dadurch gekennzeichnet, dass der Distanzring mit dem weiblichen Steckteil verrastet ist. Gemäß einer alternativen Ausführungsvariante ist der Distanzring mit dem weiblichen Steckteil verschweißt.

Empfohlenermaßen weist das männliche Steckteil zumindest ein Formschlusselement auf, das im montierten bzw. eingesteckten Zustand des männlichen Steckteils in eine Formschlussausnehmung des weiblichen Steckteils eingreift. Zweckmäßigerweise ragt das zumindest eine Formschlusselement aus der Außenoberfläche des männlichen Steckteils hervor und greift in eine Formschlussausnehmung an der Innenoberfläche der Steckausnehmung des weiblichen Steckteils ein. Nach einer empfohlenen Ausgestaltung der Erfindung weist das männliche Steckteil an seiner Außenoberfläche zwei Formschlusselemente auf - die vorzugsweise gegenüberliegend an der Außenoberfläche des männlichen Steckteils angeordnet sind - und die bevorzugt in zwei Formschlussausnehmungen an der Innenoberfläche der Steckausnehmung des weiblichen Steckteils eingreifen.

Gemäß besonders bevorzugter Ausführungsform der Erfindung durchgreifen die beiden U-Schenkel des Rückhalters in der Fixierstellung des Rückhalters jeweils eine Rückhalterausnehmung des weiblichen Steckteils und greifen jeweils in eine Eingriffsausnehmung des männlichen Steckteils ein. Empfohlenermaßen weist das weibliche Steckteil zwei gegenüberliegende Rückhalterausnehmungen auf, die vorzugsweise als Rückhalterschlitze für die beiden U-Schenkel ausgebildet sind. Die Eingriffsausnehmungen des männlichen Steckteils sind bevorzugt Bestandteil einer über zumindest den größten Teil des Umfangs des männlichen Steckteils umlaufenden Eingriffsnut für die beiden U-Schenkel. Gemäß einer Ausgestaltung der Erfindung handelt es sich bei der Eingriffsnut um eine über den gesamten Umfang des männlichen Steckteils umlaufende Eingriffsnut. Bei der Überführung des Rückhalters von seiner Fixierstellung in die Offenstellung wird zweckmäßigerweise zumindest der der Schwenkachse gegenüberliegende zweite U-Schenkel außer Eingriff mit der Eingriffsausnehmung des männlichen Steckteils gebracht und bevorzugt auch außer Eingriff mit der Rückhalterausnehmung des weiblichen Steckteils gebracht. Gemäß einer Ausgestaltung des Verbinders greift der zweite U-Schenkel in der Offenstellung lediglich noch bereichsweise in die Rückhalterausnehmung des weiblichen Steckteils ein. Es liegt im Rahmen der Erfindung, dass in der Offenstellung des Rückhalters auch der die Schwenkachse aufweisende erste U-Schenkel außer Eingriff mit der Eingriffsausnehmung des männlichen Steckteils ist. In der Offenstellung des Rückhalters kann somit das männliche Steckteil problemlos aus dem weiblichen Steckteil wieder herausgezogen werden.

Nach einer bevorzugten Ausführungsform der Erfindung ist der U-Bügel des Rückhalters in der Fixierstellung des Rückhalters zwischen zwei Fixierflanschen des weiblichen Steckteils angeordnet. Dabei ragt vorzugsweise zumindest ein Teil des U-Bügels in den Zwischenraum zwischen den beiden Fixierflanschen hinein. Zweckmäßigerweise ragt der U-Bügel in der Offenstellung des Rückhalters nicht in den Zwischenraum zwischen den beiden Fixierflanschen hinein. Vorzugsweise ist der U-Bügel dann mit Abstand bzw. mit radialem Abstand zu den beiden Fixierflanschen des weiblichen Steckteils angeordnet.

Der Erfindung liegt die Erkenntnis zugrunde, dass bei dem erfindungsgemäßen Verbinder im Vergleich zu den aus dem Stand der Technik bekannten Verbindern eine deutlich einfachere, handhabungsfreundliche und funktionssichere Überführung des Rückhalters von der Fixierstellung in die Offenstellung und umgekehrt möglich ist. Diese Überführung des Rückhalters ist einerseits sehr funktionssicher und andererseits auch mit verhältnismäßig geringem Kraftaufwand möglich. Nichtsdestoweniger wird der Rückhalter in der Fixierstellung sicher festgehalten und fixiert, so dass auch bei Vibrationen oder ähnlichen mechanischen Beanspruchungen keine automatische Überführung des Rückhalters in die Offenstellung stattfindet. Von weiterem Vorteil im Vergleich zu den bekannten Verbindern ist im Rahmen der Erfindung, dass der Rückhalter erfindungsgemäß unverlierbar an dem weiblichen Steckteil gehalten wird. Weiterhin ist hervorzuheben, dass bei dem erfindungsgemäßen Verbinder nichtsdestoweniger eine sehr dichte und präzise Verbindung zwischen männlichem und weiblichem Steckteil realisiert werden kann. Von besonderem Vorteil ist weiterhin, dass das männliche Steckteil im Vergleich zu vielen anderen Verbindern mit geringen bzw. reduzierten Einsteckkräften in das weibliche Steckteil eingesteckt werden kann. Zu betonen ist fernerhin, dass der erfindungsgemäße Verbinder mit verhältnismäßig wenig aufwendigen und kostengünstigen Maßnahmen verwirklicht werden kann.

Nachfolgend wird die Erfindung anhand einer ein Ausführungsbeispiel der Erfindung darstellenden Zeichnung näher erläutert. Es zeigen in schematischer Darstellung:
- Fig. 1: Eine Explosionsdarstellung des erfindungsgemäßen Verbinders,
- Fig. 2: einen Längsschnitt durch den erfindungsgemäßen Verbinder,
- Fig. 3: eine perspektivische Ansicht einer ersten Ausführungsform des erfindungsgemäßen Verbinders in einer ersten Funktionsstellung,
- Fig. 4: eine perspektivische Ansicht des Gegenstandes nach Fig. 3 in einer zweiten Funktionsstellung,
- Fig. 5: eine perspektivische Ansicht einer zweiten Ausführungsform des erfindungsgemäßen Verbinders,
- Fig. 6: eine Seitenansicht einer dritten Ausführungsform des erfindungsgemäßen Verbinders,
- Fig. 7: eine Frontansicht des Gegenstandes nach Fig. 6 in einer ersten Funktionsstellung,
- Fig. 8: den Gegenstand nach Fig. 7 in einer zweiten Funktionsstellung,
- Fig. 9: den Gegenstand gemäß Fig. 7 in einer dritten Funktionsstellung und
- Fig. 10: eine perspektivische Darstellung eines Rückhalters für den erfindungsgemäßen Verbinder.

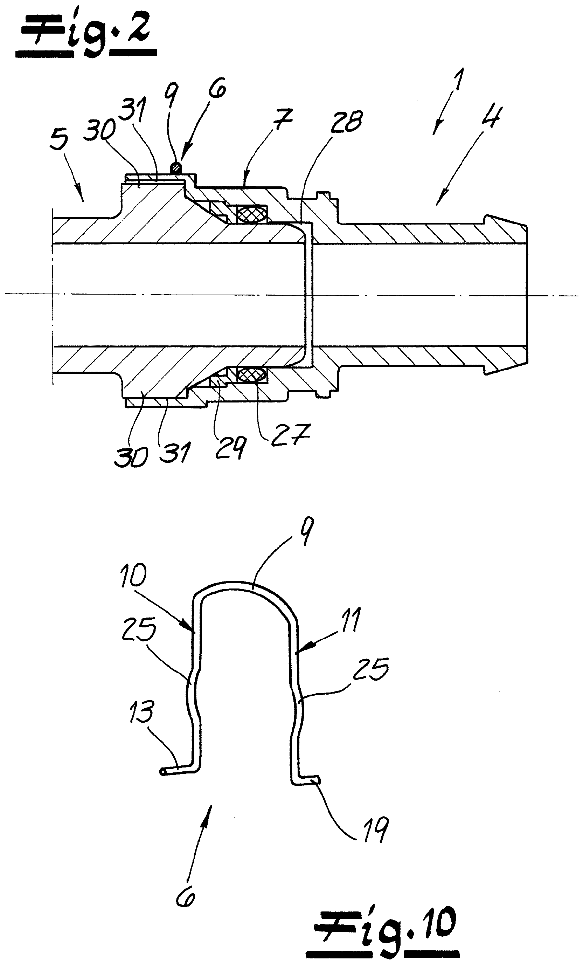

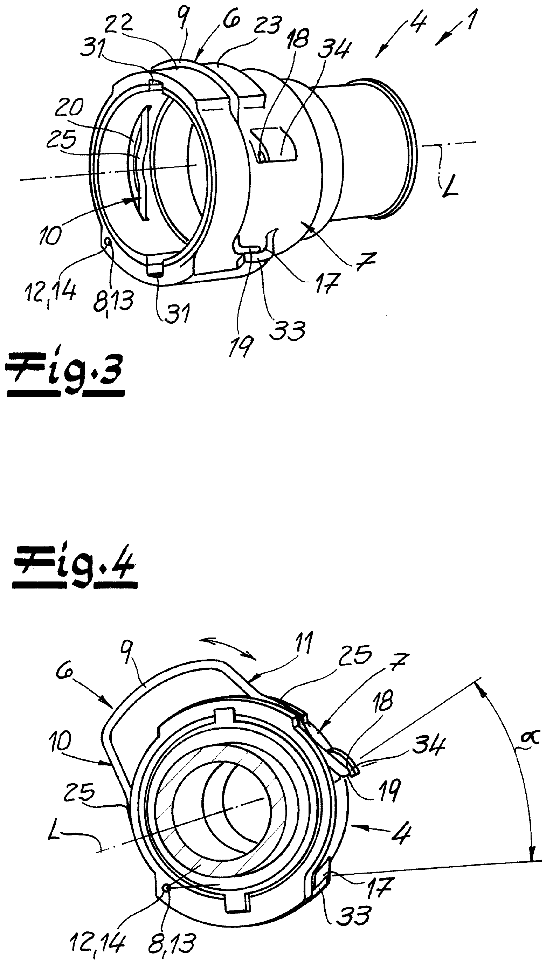

Die Figuren zeigen einen erfindungsgemäßen Verbinder 1 zum Verbinden zweier fluidführender Elemente, insbesondere zum Verbinden von zwei Kraftfahrzeugrohrleitungen 2, 3. Der Verbinder 1 weist ein weibliches Steckteil 4 und ein in das weibliche Steckteil 4 einsteckbares männliches Steckteil 5 auf. An dem weiblichen Steckteil 4 ist ein Rückhalter 6 angeschlossen und zwar im Ausführungsbeispiel unverlierbar angeschlossen. Mit diesem Rückhalter 6 ist das männliche Steckteil 5 im eingesteckten Zustand (Fig. 2) an dem weiblichen Steckteil 4 fixierbar. Der Rückhalter 6 kann aus einer Offenstellung (siehe beispielsweise Fig. 4) in eine Fixierstellung (siehe beispielsweise Fig. 3) - und umgekehrt - überführt werden und wird dabei erfindungsgemäß um eine im Bereich der Außenoberfläche 7 des weiblichen Steckteils 4 angeordnete Schwenkachse 8 geschwenkt. Die Verschwenkung des Rückhalters erfolgt dabei um einen Schwenkwinkel a, der im Ausführungsbeispiel etwa 45° betragen mag.

Erfindungsgemäß (siehe insbesondere Fig. 10) ist der Rückhalter 6 U-förmig mit einem U-Bügel 9 und zwei an den U-Bügel 9 angeschlossenen U-Schenkeln 10, 11 ausgebildet. Es liegt im Rahmen der Erfindung, dass der Rückhalter 6 in Richtung quer zur Längsachse L des weiblichen Steckteils 4 schwenkbar ist bzw. um die Schwenkachse 8 schwenkbar ist (beispielsweise vergleichende Betrachtung der Figuren 3 und 4). Nach einer bevorzugten Ausgestaltung und im Ausführungsbeispiel weist der Rückhalter 6 an jedem U-Schenkel 10, 11 eine bogenförmige Krümmung 25 auf, die zur Außenseite des Verbinders hin gerichtet ist. Vorzugsweise und im Ausführungsbeispiel ist diese bogenförmige Krümmung 25 in Bezug auf die Länge des jeweiligen U-Schenkels 10, 11 im mittleren Drittel des jeweiligen U-Schenkels 10, 11 angeordnet.

Erfindungsgemäß greift der Rückhalter 6 mit dem Ende seines ersten U-Schenkels 10 in eine Schwenkausnehmung 12 des weiblichen Steckteils 4 ein und die Schwenkachse 8 ist in dieser Schwenkausnehmung 12 angeordnet. Vorzugsweise ist an dem die Schwenkachse 8 bildenden Ende des ersten U-Schenkels 10 zumindest ein sich quer zur Längsrichtung des ersten U-Schenkels 10 erstreckender Schwenkfortsatz 13 angeschlossen, der bevorzugt und im Ausführungsbeispiel senkrecht zu dem ersten U-Schenkel 10 orientiert ist. Vorzugsweise und im Ausführungsbeispiel bildet dieser Schwenkfortsatz 13 die Schwenkachse 8 des Rückhalters 6.

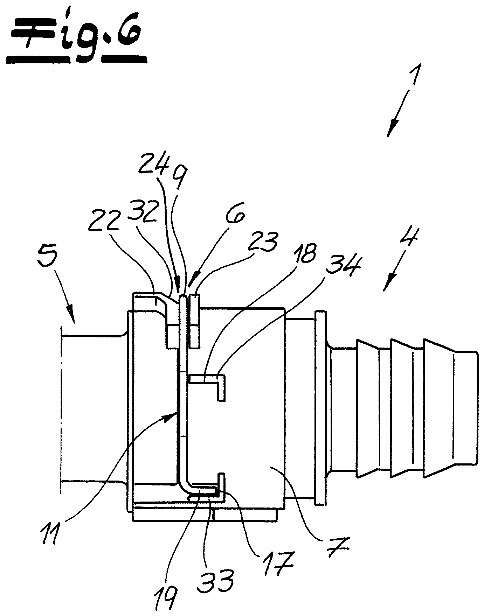

Empfohlenermaßen und im Ausführungsbeispiel greift der an das Ende des ersten U-Schenkels 10 angeschlossene Schwenkfortsatz 13 in eine über ihren Umfang geschlossene Schwenkausnehmung 12 des weiblichen Steckteils 4 ein (siehe insbesondere Fig. 4 sowie Figuren 7 bis 9). Nach einer Ausführungsform und im Ausführungsbeispiel nach Fig. 4 ist die Schwenkausnehmung 12 als Schwenkbohrung 14 des weiblichen Steckteils 4 ausgebildet und der an dem Ende des ersten U-Schenkels 10 angeschlossene Schwenkfortsatz 13 greift formschlüssig und zweckmäßigerweise ohne Spiel bzw. im Wesentlichen ohne Spiel in diese Schwenkbohrung 14 ein. Die Schwenkachse 8 ist in dieser Schwenkbohrung 14 angeordnet. - Insbesondere im Ausführungsbeispiel nach den Figuren 6 bis 9 ist dagegen die Schwenkausnehmung 12 als Langloch 15 ausgebildet und der an dem ersten U-Schenkel 10 angeschlossene Schwenkfortsatz 13 greift mit Spiel in das Langloch 15 ein, wobei die Schwenkachse 8 des Rückhalters 6 in dem Langloch 15 angeordnet ist. Diese Ausführungsform wird weiter unten noch näher erläutert.

Nach bevorzugter Ausführungsform und im Ausführungsbeispiel ist der zweite U-Schenkel 11 des Rückhalters 6 mit seinem Ende in der Fixierstellung des Rückhalters 6 an dem weiblichen Steckteil 4 fixierbar bzw. verrastbar und dabei ist er bevorzugt und im Ausführungsbeispiel in einer an der Außenoberfläche 7 des weiblichen Steckteils 4 angeordneten Fixierausnehmung 17 fixierbar bzw. verrastbar. Weiterhin ist nach bevorzugter Ausführungsform der zweite U-Schenkel 11 mit seinem Ende in der Offenstellung des Rückhalters 6 an dem weiblichen Steckteil 4 fixierbar bzw. verrastbar und bevorzugt und im Ausführungsbeispiel in einer an der Außenoberfläche 7 des weiblichen Steckteils 4 angeordneten Offenstellungsausnehmung 18 fixierbar bzw. verrastbar. Empfohlenermaßen und im Ausführungsbeispiel ist an dem Ende des zweiten U-Schenkels 11 ein sich quer - sowie vorzugsweise und im Ausführungsbeispiel senkrecht - zur Längsrichtung des zweiten U-Schenkels 11 erstreckender U-Fortsatz 19 vorgesehen und vorzugsweise ist dieser U-Fortsatz 19 in der Fixierstellung und/oder in der Offenstellung des Rückhalters 6 in der Fixierausnehmung 17 und/oder in der Offenstellungsausnehmung 18 fixierbar bzw. verrastbar.

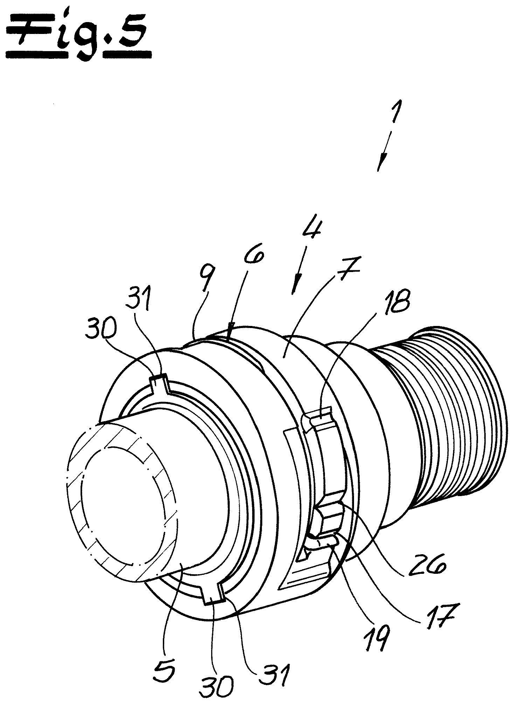

Die Figuren 3 und 4 zeigen eine erste Ausführungsform des erfindungsgemäßen Verbinders. Hier ist der zweite U-Schenkel 11 bzw. der U-Fortsatz 19 des zweiten U-Schenkels 11 in der Fixierstellung (Fig. 3) in der Fixierausnehmung 17 fixierbar bzw. verrastbar sowie in der Offenstellung (Fig. 4) in der Offenstellungsausnehmung 18 fixierbar bzw. verrastbar. - Dagegen weist die zweite in der Fig. 5 dargestellte Ausführungsform des erfindungsgemäßen Verbinders zusätzlich zu der Fixierstellung und der Offenstellung auch noch eine Zwischenstellung auf. Bevorzugt und im Ausführungsbeispiel nach Fig. 5 ist der zweite U-Schenkel 11 bzw. der U-Fortsatz 19 des zweiten U-Schenkels 11 in der Zwischenstellung in einer Zwischenstellungsausnehmung 26 fixierbar bzw. verrastbar. Bei der zweiten Ausführungsform gemäß Fig. 5 sind also drei Funktionszustände möglich (Offenstellung, Zwischenstellung und Fixierstellung). Bei der dritten Ausführungsform des erfindungsgemäßen Verbinders (Figuren 6 bis 9) ist wiederum lediglich eine Fixierstellung und eine Offenstellung vorgesehen.

Vorzugsweise ist in der Fixierstellung und der Offenstellung des Rückhalters 6 an der Fixierausnehmung 17 einerseits und an der Offenstellungsausnehmung 18 andererseits ein Anschlag für den U-Fortsatz 19 des zweiten U-Schenkels vorhanden, der eine weitere Verschwenkung des Rückhalters 6 um die Schwenkachse 8 blockiert. Gemäß einer empfohlenen Ausgestaltung ist der U-Fortsatz 19 in der Fixierstellung und/oder in der Offenstellung durch jeweils ein an das weibliche Steckteil 4 angeschlossenes Abdeckelement 33, 34 zur Außenseite des Verbinders 1 hin geschützt. Diese bevorzugt vorgesehenen Abdeckelemente 33, 34 sind insbesondere in der Fig. 4 erkennbar.

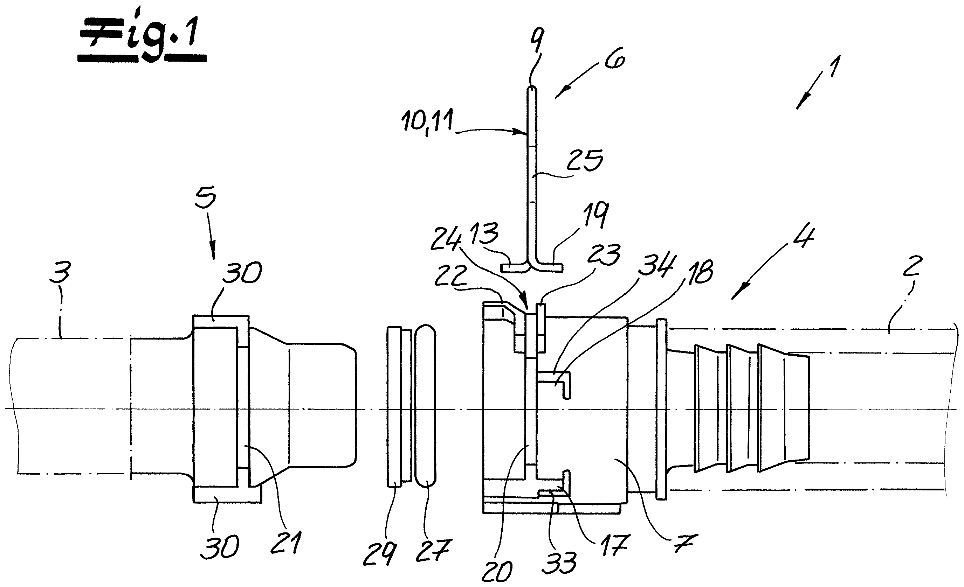

Das männliche Steckteil 5 ist zweckmäßigerweise und im Ausführungsbeispiel (siehe insbesondere Figuren 1 und 2) unter Zwischenschaltung eines bevorzugt als Dichtungsring 27 ausgebildeten Dichtelementes in die Steckausnehmung 28 des weiblichen Steckteils 4 einsteckbar. Empfohlenermaßen und im Ausführungsbeispiel (insbesondere Fig. 1 und 2) ist im eingesteckten Zustand (Fig. 2) zwischen männlichem Steckteil 5 und dem Dichtungsring 27 ein Distanzring 29 zwischengeschaltet. Vorzugsweise und im Ausführungsbeispiel weist das männliche Steckteil 5 Formschlusselemente 30 auf, die im eingesteckten Zustand jeweils in eine Formschlussausnehmung 31 des weiblichen Steckteils 4 eingreifen. Bevorzugt und im Ausführungsbeispiel ist das männliche Steckteil 5 mit zwei an seiner Außenoberfläche angeordneten und einander gegenüberliegenden Formschlusselementen 30 ausgestattet und das weibliche Steckteil 4 verfügt über zwei dazu komplementäre Formschlussausnehmungen 31.

Es liegt im Rahmen der Erfindung, dass die beiden U-Schenkel 10, 11 des Rückhalters 6 in der Fixierstellung des Rückhalters 6 jeweils eine Rückhalterausnehmung 20 des weiblichen Steckteils 4 durchgreifen. Bevorzugt und im Ausführungsbeispiel sind die Rückhalterausnehmungen 20 des weiblichen Steckteils 4 als gegenüberliegende Rückhalterschlitze ausgebildet (siehe insbesondere Figuren 1 und 3). Im eingesteckten Zustand des männlichen Steckteils 5 und in der Fixierstellung des Rückhalters 6 greifen die beiden U-Schenkel 10, 11 des Rückhalters 6 außerdem jeweils in eine Eingriffsausnehmung 21 des männlichen Steckteils 5 ein. Diese Eingriffsausnehmungen 21 sind im Ausführungsbeispiel nach den Figuren Bestandteil einer quasi über dem Umfang des männlichen Steckteils 5 umlaufenden Eingriffsnut (siehe insbesondere Figuren 1 und 2). Im eingesteckten Zustand des männlichen Steckteils 5 und in der Fixierstellung des Rückhalters 6 durchgreifen somit die beiden U-Schenkel 10, 11 des Rückhalters 6 zum einen die Rückhalterausnehmungen 20 bzw. Rückhalterschlitze des weiblichen Steckteils 4 und zum anderen greifen sie in die Eingriffsausnehmungen 21 bzw. in die Eingriffsnut des männlichen Steckteils 5 ein. Damit ist das männliche Steckteil 5 in dem weiblichen Steckteil 4 funktionssicher gehalten. Nach bedarfsweiser Überführung des Rückhalters 6 in seine Offenstellung kann das männliche Steckteil 5 problemlos von dem weiblichen Steckteil 4 gelöst werden bzw. aus der Steckausnehmung 28 des weiblichen Steckteils 4 herausgezogen werden. In dieser Offenstellung ist der Rückhalter 6 nichtsdestoweniger unverlierbar an dem weiblichen Steckteil 4 gehalten.

Nach bevorzugter Ausführungsform der Erfindung ist der U-Bügel 9 des Rückhalters 6 in der Fixierstellung des Rückhalters 6 zwischen zwei Fixierflanschen 22, 23 des weiblichen Steckteils 4 angeordnet (siehe beispielsweise Figuren 3 und 6). Im Ausführungsbeispiel nach Fig. 6 ist der U-Bügel 9 des Rückhalters 6 dabei vollständig im Zwischenraum 24 zwischen den beiden Fixierflanschen 22, 23 aufgenommen. In der Fig. 6 ist weiterhin erkennbar, dass nach einer bevorzugten Ausgestaltung der Erfindung der vordere Fixierflansch 22 eine rückhalterseitige Abschrägung 32 aufweist, die die Manipulation des Rückhalters 6 erleichtert.

Es liegt im Rahmen der Erfindung, dass der Rückhalter 6 an den Enden seiner U-Schenkel 10, 11 jeweils einen Fortsatz 13, 19 aufweist und zwar bevorzugt und im Ausführungsbeispiel den Schwenkfortsatz 13 einerseits und den U-Fortsatz 19 andererseits. Nach besonders empfohlener Ausführungsform und dem Ausführungsbeispiel stehen die beiden Fortsätze 13, 19 dabei in entgegengesetzte Richtungen von dem Rückhalter 6 ab (siehe insbesondere Figuren 1 und 10). Diese Orientierung der Fortsätze 13, 19 begünstigt die Unverlierbarkeit des Rückhalters 6, wenn in der Offenstellung des Rückhalters 6 (Fig. 4) der Schwenkfortsatz 13 einerseits in die Schwenkausnehmung 12 des weiblichen Steckteils 4 eingreift und der U-Fortsatz 19 andererseits in die Offenstellungsausnehmung 18 des weiblichen Steckteils 4 eingreift.

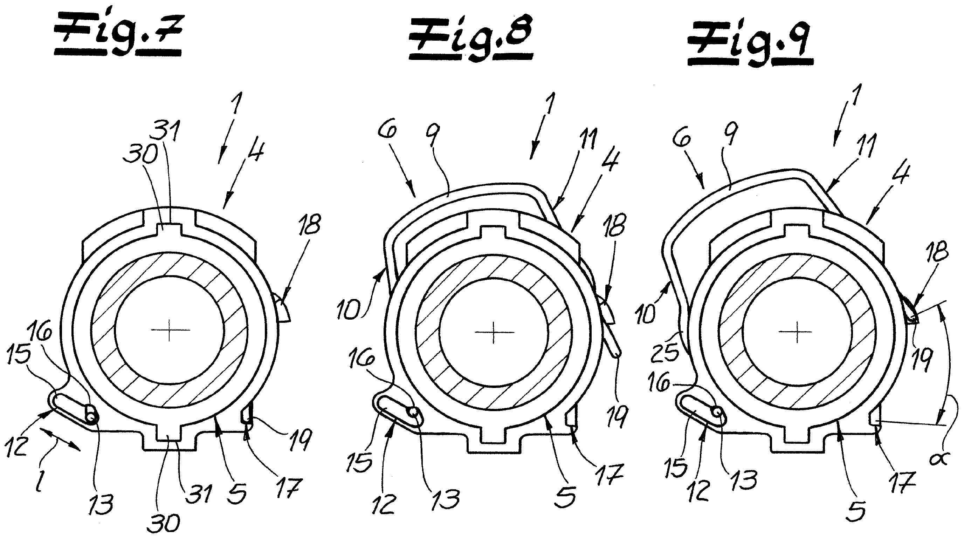

Die Figuren 6 bis 9 zeigen eine weitere Ausführungsform des erfindungsgemäßen Verbinders 1. Die Schwenkausnehmung 12 des weiblichen Steckteils 4 ist hier als Langloch 15 ausgebildet, wobei der Schwenkfortsatz 13 des ersten U-Schenkels 10 mit Spiel in dieses Langloch 15 eingreift. Die Schwenkachse 8 des Rückhalters 6 ist hier in dem Langloch 15 angeordnet. Empfohlenermaßen und im Ausführungsbeispiel weist das Langloch 15 eine quer zur Längserstreckung I des Langloches 15 angeordnete Langlochnut 16 auf, wobei der an dem ersten U-Schenkel 10 angeschlossene Schwenkfortsatz 13 beim Verschwenken des Rückhalters 6 in die Offenstellung oder umgekehrt in die Fixierstellung in dieser Langlochnut 16 des Langloches 15 angeordnet ist (siehe Figuren 8 und 9). Diese Ausgestaltung der Schwenkausnehmung 12 macht eine besonders einfache und funktionssichere Manipulation des Rückhalters 6 möglich und nichtsdestoweniger ist der Rückhalter 6 in seiner Offenstellung unverlierbar an dem weiblichen Steckteil 4 gehalten.

## Patentansprüche

1. Verbinder (1) zum Verbinden zweier fluidführender Elemente, insbesondere zum Verbinden von zwei Kraftfahrzeugrohrleitungen (2, 3), - mit einem weiblichen Steckteil (4) und einem in das weibliche Steckteil (4) einsteckbaren männlichen Steckteil (5), wobei an dem weiblichen Steckteil (4) ein Rückhalter (6) angeschlossen ist, mit dem das männliche Steckteil (5) im eingesteckten Zustand an dem weiblichen Steckteil (4) fixierbar ist, wobei der Rückhalter (6) aus einer Offenstellung in eine Fixierstellung - und umgekehrt - um eine im Bereich der Außenoberfläche (7) des weiblichen Steckteils (4) angeordnete Schwenkachse (8) schwenkbar ist, wobei der Rückhalter U-förmig mit einem U-Bügel (9) und zwei an den U-Bügel (9) angeschlossenen U-Schenkeln (10, 11) ausgebildet ist, wobei der Rückhalter (6) mit einem Ende eines ersten U-Schenkels (10) in eine Schwenkausnehmung (12) des weiblichen Steckteils (4) eingreift,
**dadurch gekennzeichnet, dass**
die Schwenkausnehmung (12) als Schwenkbohrung (14) des weiblichen Steckteils (4) ausgebildet ist, wobei das Ende des ersten U-Schenkels (10) bzw. ein an dem ersten U-Schenkel (10) angeschlossener Schwenkfortsatz (13) formschlüssig in diese als Schwenkbohrung (14) ausgebildete Schwenkausnehmung (12) eingreift und wobei die Schwenkachse (8) in der Schwenkbohrung (14) angeordnet ist
oder
dass die Schwenkausnehmung (12) als Langloch (15) ausgebildet ist, wobei das Ende des ersten U-Schenkels (10) bzw. ein an dem ersten U-Schenkel (10) angeschlossener Schwenkfortsatz (13) mit Spiel in das Langloch (15) eingreift und wobei die Schwenkachse (8) des Rückhalters (6) in dem Langloch (15) angeordnet ist.

2. Verbinder nach Anspruch 1, wobei die Schwenkachse (8) an einem Ende eines ersten U-Schenkels (10) des Rückhalters (6) angeordnet ist bzw. von einem Ende dieses U-Schenkels (10) gebildet wird.

3. Verbinder nach einem der Ansprüche 1 oder 2, wobei der Rückhalter (6) in Richtung quer zur Längsachse L des weiblichen Steckteils (4) schwenkbar ist.

4. Verbinder nach einem der Ansprüche 1 bis 3, wobei an dem die Schwenkachse (8) bildenden Ende des ersten U-Schenkels (10) zumindest ein sich quer zur Längsrichtung des ersten U-Schenkels (10) erstreckender Schwenkfortsatz (13) angeschlossen ist und wobei vorzugsweise dieser Schwenkfortsatz (13) die Schwenkachse (8) des Rückhalters (6) bildet.

5. Verbinder nach einem der Ansprüche 1 bis 4, wobei das die Schwenkachse (8) bildende Ende des ersten U-Schenkels (10) oder der daran angeschlossene Schwenkfortsatz (13) in eine über ihren Umfang geschlossene Schwenk-ausnehmung (12) des weiblichen Steckteils (4) eingreift.

6. Verbinder nach einem der Ansprüche 1 bis 5, wobei das Langloch (15) eine quer zur Längserstreckung des Langloches (15) angeordnete Langlochnut (16) aufweist, wobei das Ende des ersten U-Schenkels (10) bzw. der an dem ersten U-Schenkel (10) angeschlossene Schwenkfortsatz (13) zumindest beim Verschwenken des Rückhalters (6) in die Offenstellung oder in die Fixierstellung in der Langlochnut (16) des Langloches (15) angeordnet ist.

7. Verbinder nach einem der Ansprüche 1 bis 6, wobei der zweite U-Schenkel (11) - insbesondere ein der Schwenkachse (8) gegenüberliegender zweiter U-Schenkel (11) - vorzugsweise mit seinem Ende in der Fixierstellung des Rückhalters (6) an dem weiblichen Steckteil (4) fixierbar bzw. verrastbar ist und bevorzugt in einer an der Außenoberfläche (7) des weiblichen Steckteils (4) angeordneten Fixierausnehmung (17) fixierbar bzw. verrastbar ist.

8. Verbinder nach einem der Ansprüche 1 bis 7, wobei der zweite U-Schenkel (11) - insbesondere der der Schwenkachse (8) gegenüberliegende zweite U-Schenkel (11) - mit seinem Ende in der Offenstellung des Rückhalters (6) an dem weiblichen Steckteil (4) fixierbar bzw. verrastbar ist und bevorzugt in einer an der Außenoberfläche (7) des weiblichen Steckteils (4) angeordneten Offenstellungsausnehmung (18) fixierbar bzw. verrastbar ist.

9. Verbinder nach einem der Ansprüche 1 bis 8, wobei an dem der Schwenkachse (8) gegenüberliegenden Ende des zweiten U-Schenkels (11) ein sich quer zur Längsrichtung des zweiten U-Schenkels (11) erstreckender U-Fortsatz (19) vorgesehen ist und wobei vorzugsweise dieser U-Fortsatz (19) in der Fixierstellung und/oder in der Offenstellung des Rückhalters (6) in der Fixierausnehmung (17) und/oder in der Offenstellungsausnehmung (18) fixierbar bzw. verrastbar ist.

10. Verbinder nach einem der Ansprüche 1 bis 9, wobei die beiden U-Schenkel (10, 11) des Rückhalters (6) in der Fixierstellung des Rückhalters (6) jeweils eine Rückhalterausnehmung (20) des weiblichen Steckteils (4) durchgreifen und jeweils in eine Eingriffsausnehmung (21) des männlichen Steckteils (5) eingreifen.

11. Verbinder nach einem der Ansprüche 1 bis 10, wobei der U-Bügel (9) des Rückhalters (6) in der Fixierstellung des Rückhalters (6) zwischen zwei Fixierflanschen (22, 23) des weiblichen Steckteils (4) angeordnet ist und wobei vorzugsweise zumindest ein Teil des U-Bügels (9) in den Zwischenraum (24) zwischen den beiden Fixierflanschen (22, 23) hineinragt.

12. Verbinder nach einem der Ansprüche 1 bis 11, wobei der Rückhalter (6) an den Enden seiner U-Schenkel (10, 11) jeweils einen Fortsatz (13, 19) - insbesondere den Schwenkfortsatz (13) einerseits und den U-Fortsatz (19) andererseits - aufweist und wobei die beiden Fortsätze (13, 19) in entgegengesetzte Richtungen von dem Rückhalter (6) abstehen.

## Claims

1. A connector (1) for connecting two fluid-carrying elements, in particular for connecting two motor vehicle pipes (2, 3), with a female plug-in (4) and a male plug-in (5) that can be inserted into the female plug-in (4), wherein a retainer (6) is attached to the female plug-in (4), and can be used to fix the male plug-in (5) on the female plug-in (4) in the inserted state, wherein the retainer (6) can be pivoted out of an open position into a fixing position and vice versa around a swivel axis (8) arranged in the area of the outer surface (7) of the female plug-in (4), wherein the retainer is U-shaped in design with a U-bracket (9) and two U-legs (10, 11) attached to the U-bracket (9), wherein the retainer (6) engages with a first end of a first U-leg (10) into a pivot recess (12) of the female plug-in (4),
**characterized in that**
the pivot recess (12) is designed as a pivot bore (14) of the female plug-in (4), wherein the end of the first U-leg (10) or a pivot extension (13) attached to the first U-leg (10) positively engages into this pivot recess (12) designed as a pivot bore (14), and wherein the pivot axis (8) is arranged in the pivot bore (14), or
the pivot recess (12) is designed as an oblong hole (15), wherein the end of the first U-leg (10) or a pivot extension (13) attached to the first U-leg (10) engages with clearance into the oblong hole (15), and wherein the pivot axis (8) of the retainer (6) is arranged in the oblong hole (15).

2. The connector according to claim 1, wherein the pivot axis (8) is arranged at one end of a first U-leg (10) of the retainer (6), or is formed by an end of this U-leg (10).

3. The connector according to one of claims 1 or 2, wherein the retainer (6) can be pivoted in a direction transverse to the longitudinal axis L of the female plug-in (4).

4. The connector according to one of claims 1 to 3, wherein at least one pivot extension (13) extending transverse to the longitudinal direction of the first U-leg (10) is connected to the end of the first U-leg (10) forming the pivot axis (8), and wherein this pivot extension (13) preferably forms the pivot axis (8) of the retainer (6) .

5. The connector according to one of claims 1 to 4, wherein the end of the first U-leg (10) forming the pivot axis (8) or the pivot extension (13) connected thereto engages into a circumferentially closed pivot recess (12) of the female plug-in (4).

6. The connector according to one of claims 1 to 5, wherein the oblong hole (15) has an oblong hole groove (16) arranged transverse to the longitudinal extension of the oblong hole (15), wherein the end of the first U-leg (10) or the pivot extension (13) attached to the first U-leg (10) is arranged in the open position or in the fixing position in the oblong hole groove (16) of the oblong hole (15), at least while pivoting the retainer (6).

7. The connector according to one of claims 1 or 6, wherein the second U-leg (11), in particular a second U-leg (11) lying opposite the pivot axis (8), can be fixed or latched to the female plug-in (4), advantageously with its end in the fixing position of the retainer (6), and can preferably be fixed or latched in a fixing recess (17) arranged on the outer surface (7) of the female plug-in (4).

8. The connector according to one of claims 1 to 7, wherein the second U-leg (11), in particular a second U-leg (11) lying opposite the pivot axis (8), can be fixed or latched to the female plug-in, with its end in the open position of the retainer (6), and can preferably be fixed or latched in a open position recess (18) arranged on the outer surface (7) of the female plug-in (4).

9. The connector according to one of claims 1 to 8, wherein a U-extension (19) extending transverse to the longitudinal direction of the second U-leg (11) is provided at the end of the second U-leg (11) lying opposite the pivot axis (8), and wherein this U-extension (19) can preferably be fixed or latched in the fixing recess (17) and/or in the open position recess (18) in the fixing position and/or in the open position of the retainer (6).

10. The connector according to one of claims 1 to 9, wherein the two U-legs (10, 11) of the retainer (6) engage through a respective retainer recess (20) of the female plug-in (4) in the fixing position of the retainer (6), and each engage into an engaging recess (21) of the male plug-in (5).

11. The connector according to one of claims 1 to 10, wherein the U-bracket (9) of the retainer (6) is arranged between two fixing flanges (22, 23) of the female plug-in (4) in the fixing position of the retainer (6), and wherein preferably at least part of the U-bracket (9) protrudes into the gap (24) between the two fixing flanges (22, 23).

12. The connector according to one of claims 1 to 11, wherein the retainer (6) has a respective extension (13, 19) at the ends of its U-legs (10, 11), in particular the pivot extension (13) on the one hand and the U-extension (19) on the other, and wherein the two extensions (13, 19) project from the retainer (6) in opposite directions.

## Revendications

1. Raccord (1) pour relier deux éléments transportant un fluide, notamment pour relier deux conduites de véhicule automobile (2, 3), avec une partie emboîtable femelle (4) et une partie emboîtable mâle (5) pouvant être emboîtée dans la partie emboîtable femelle (4), sachant que sur la partie emboîtable femelle (4) est raccordé un élément de retenue (6) avec lequel la partie emboîtable femelle (5) peut être fixée à l'état emboîté à la partie emboîtable mâle (4), sachant que l'élément de retenue (6) peut être pivotée d'une position d'ouverture à une position de fixation, et inversement, autour d'un axe de pivotement (8) disposé dans la zone de la surface extérieure (7) de la partie emboîtable femelle (4), sachant que l'élément de retenue est constitué en forme de U avec un étrier en U (9) et deux branches en U (10, 11) raccordées à l'étrier en U (9), sachant que l'élément de retenue (6) vient en prise avec une extrémité d'une première branche en U (10) dans un évidement de pivotement (12) de la partie emboîtable femelle (4),
**caractérisé en ce que**
l'évidement de pivotement (12) est constitué sous la forme d'un trou de pivotement (14) de la partie emboîtable femelle (4), sachant que l'extrémité de la première branche en U (10) ou un prolongement de pivotement (13) raccordé à la première branche en U (10) vient en prise par conformité de forme dans cet évidement de pivotement (12) constitué sous la forme d'un trou de pivotement (14) et sachant que l'axe de pivotement (8) à est disposé dans le trou de pivotement (14)
ou
**en ce que** l'évidement de pivotement (12) est constitué sous la forme d'un trou oblong (15), sachant que l'extrémité de la première branche en U (10) ou un prolongement de pivotement (13) raccordé à la première branche en U (10) vient en prise avec jeu dans le trou oblong (15), sachant que l'axe de pivotement (8) de l'élément de retenue (6) est disposé dans le trou oblong (15) .

2. Raccord selon la revendication 1, sachant que l'axe de pivotement (8) est disposé à une extrémité d'une première branche en U (10) de l'élément de retenue (6) ou est formé par une extrémité de cette branche en U (10) .

3. Raccord selon l'une quelconque des revendications 1 ou 2, sachant que l'élément de retenue (6) peut être pivoté dans une direction transversalement à l'axe longitudinal L de la partie emboîtable femelle (4).

4. Raccord selon l'une quelconque des revendications 1 à 3, sachant que sur l'extrémité formant l'axe de pivotement (8) de la première branche en U (10) est raccordé au moins un prolongement de pivotement (13) s'étendant transversalement à la direction longitudinale de la première branche en U (10) et sachant que de préférence ce prolongement de pivotement (13) forme l'axe de pivotement (8) de l'élément de retenue (6).

5. Raccord selon l'une quelconque des revendications 1 à 4, sachant que l'extrémité formant l'axe de pivotement (8) de la première branche en U (10) ou le prolongement de pivotement (13), qui y est raccordé, vient en prise dans un évidement de pivotement (12) fermé sur sa périphérie de la partie emboîtable femelle (4).

6. Raccord selon l'une quelconque des revendications 1 à 5, sachant que le trou oblong (15) comporte une rainure de trou oblong (16) disposée transversalement à l'extension longitudinale du trou oblong (15), sachant que l'extrémité de la première branche en U (10) ou le prolongement de pivotement (13) raccordé à la première branche en U (10) est disposé au moins lors du pivotement de l'élément de retenue (6) dans la position d'ouverture ou dans la position de fixation dans la rainure de trou oblong (16) du trou oblong (15).

7. Raccord selon l'une quelconque des revendications 1 à 6, sachant que la deuxième branche en U (11), notamment une deuxième branche en U (11) opposée à l'axe de pivotement (8), peut être fixée ou enclenchée sur la partie emboîtable femelle (4) avec son extrémité dans la position de fixation de l'élément de retenue (6) et peut être fixée ou enclenchée de préférence dans un évidement de fixation (17) disposé sur la surface extérieure (7) de la partie emboîtable femelle (4).

8. Raccord selon l'une quelconque des revendications 1 à 7, sachant que la deuxième branche en U (11), notamment la deuxième branche en U (11) opposée à l'axe de pivotement (8), peut être fixée ou enclenchée sur la partie emboîtable femelle (4) avec son extrémité dans la position d'ouverture de l'élément de retenue (6) et peut être fixée ou enclenchée de préférence dans un évidement de position d'ouverture (18) disposé sur la surface extérieure (7) de la partie emboîtable femelle (4) .

9. Raccord selon l'une quelconque des revendications 1 à 8, sachant qu'à l'extrémité opposée à l'axe de pivotement (8) de la deuxième branche en U (11) un prolongement en U (19) s'étendant transversalement à la direction longitudinale de la deuxième branche U (11) est prévu et sachant de préférence que ce prolongement en U (19) peut être fixé ou enclenché dans l'évidement de fixation (17) et/ou dans l'évidement de position d'ouverture (18) dans la position de fixation et/ou dans la position d'ouverture de l'élément de retenue (6) .

10. Raccord selon l'une quelconque des revendications 1 à 9, sachant que les deux branches en U (10, 11) de l'élément de retenue (6) pénètrent respectivement à travers un évidement d'élément de retenue (20) de la partie emboîtable femelle (4) dans la position de fixation de l'élément de retenue (6) et viennent respectivement en prise dans un évidement d'engagement (21) de la partie emboîtable mâle (5).

11. Raccord selon l'une quelconque des revendications 1 à 10, sachant que l'étrier en U (9) de l'élément de retenue (6) est disposé dans la position de fixation de l'élément de retenue (6) entre deux brides de fixation (22, 23) de la partie emboîtable femelle (4) et sachant que de préférence au moins une partie de l'étrier en U (9) se prolonge dans l'espace intermédiaire (24) entre les deux brides de fixation (22, 23).

12. Raccord selon l'une quelconque des revendications 1 à 11, sachant que l'élément de retenue (6) comporte respectivement aux extrémités de ses branches en U (10, 11) un prolongement (13, 19), notamment le prolongement de pivotement (13) d'une part, et le prolongement en U (19) d'autre part, et sachant que les deux prolongements (13, 19) s'écartent de l'élément de retenue (6) dans des directions opposées.
